(19) Europäisches Patentamt
European Patent Office
Office européen des brevets

(11) **EP 0 640 004 B1**

(12) **FASCICULE DE BREVET EUROPEEN**

(45) Date de publication et mention
de la délivrance du brevet:
**14.01.1998 Bulletin 1998/03**

(21) Numéro de dépôt: **94909970.9**

(22) Date de dépôt: **16.03.1994**

(51) Int. Cl.$^6$: **B01D 53/52**, B01D 53/86,
B01D 53/75, B01J 21/00,
B01J 21/18, B01J 23/00,
C01B 17/04

(86) Numéro de dépôt international:
**PCT/FR94/00283**

(87) Numéro de publication internationale:
**WO 94/21358 (29.09.1994 Gazette 1994/22)**

(54) **PROCEDE POUR OXYDER DIRECTEMENT EN SOUFRE PAR VOIE CATALYTIQUE, AVEC UNE SELECTIVITE ELEVEE, L' H2S CONTENU EN FAIBLE CONCENTRATION DANS UN GAZ**

VERFAHREN ZUR HOCHSELEKTIVEN KATALYTISCHEN DIREKTOXIDATION VON IN NIEDRIGER KONZENTRATIONEN IN EINEM GAS VORHANDENEM H2S

METHOD FOR THE DIRECT, HIGH-SELECTIVITY, CATALYTIC, OXIDATIVE CONVERSION INTO SULPHUR OF H2S PRESENT IN A LOW CONCENTRATION IN A GAS

(84) Etats contractants désignés:
**AT BE CH DE DK ES FR GB GR IE IT LI LU MC NL PT SE**

(30) Priorité: **16.03.1993 FR 9302996**

(43) Date de publication de la demande:
**01.03.1995 Bulletin 1995/09**

(73) Titulaire:
**ELF AQUITAINE PRODUCTION
92400 Courbevoie (FR)**

(72) Inventeurs:
• **ANGLEROT, Didier
F-64140 Lons (FR)**
• **DEMARAIS, Guy
F-64000 Pau (FR)**
• **MAILLES, Pierre
F-64150 Lagor (FR)**

(74) Mandataire: **Boillot, Marc et al
Elf Exploration Production
Département Propriété Industrielle
Tour Elf
EP/T/RD/DPI - Bureau 34 G 47
92078 Paris La Défense Cedex (FR)**

(56) Documents cités:
**EP-A- 0 506 160       DE-A- 1 809 329
DE-A- 2 652 099       DE-A- 2 819 933
FR-A- 1 603 452       US-A- 3 790 659
US-A- 4 054 642**

## Description

L'invention a trait à un procédé pour oxyder directement en soufre par voie catalytique, avec une sélectivité élevée, l'$H_2S$ contenu en faible concentration dans un gaz.

Pour récupérer l'$H_2S$ contenu en concentration, comprise entre 0,01% et 5% en volume, dans des gaz de provenances diverses, on peut faire appel, en autres, à des procédés mettant en oeuvre une oxydation catalytique directe de l'$H_2S$ en soufre selon la réaction

$$H_2S + 1/2 O_2 \rightarrow S + H_2O.$$

Dans de tels procédés, on fait passer le gaz à traiter renfermant l'$H_2S$ en mélange avec une quantité appropriée d'un gaz renfermant de l'oxygène libre, par exemple oxygène, air ou encore air enrichi en oxygène, au contact d'un catalyseur d'oxydation de l'$H_2S$ en soufre en réalisant ce contact à des températures soit supérieures au point de rosée du soufre formé, auquel cas l'oxydation se passe en phase vapeur, ou bien à des températures inférieures au point de rosée du soufre formé, auquel cas ledit soufre se dépose sur le catalyseur, ce qui nécessite périodiquement une régénération du catalyseur chargé de soufre par balayage au moyen d'un gaz non oxydant ayant une température entre 200°C et 500°C.

En particulier, l'oxydation directe de l'$H_2S$ en soufre en phase vapeur, c'est-à-dire à des températures supérieures à environ 200°C, peut être réalisée au contact d'un catalyseur consistant en oxyde de titane (EP-A-0078690), en oxyde de titane renfermant un sulfate de métal alcalino-terreux (WO-A-8302068), en oxyde de titane renfermant de l'oxyde de nickel et éventuellement de l'oxyde d'aluminium (EP-A-0140045), en un oxyde du type oxyde de titane, oxyde de zirconium ou silice associé à un ou plusieurs composés de métaux de transition choisis parmi Fe,Cu, Zn, Cd, Cr, Mo, W, Co, Ni et Bi, de préférence Fe, et éventuellement à un ou plusieurs composés de métaux précieux choisis parmi Pd, Pt, Ir et Rh, de préférence Pd (FR-A-2511663), ou encore en une alumine stabilisée thermiquement et associée à un ou plusieurs composés de métaux de transition tels que précités, notamment Fe, et éventuellement à un ou plusieurs composés de métaux précieux choisis parmi Pd, Pt, Ir et Rh (FR-A-2540092).

L'oxydation directe de l'$H_2S$ en soufre en opérant à des températures telles que le soufre formé se dépose sur le catalyseur peut être effectuée, quant à elle, au contact d'un catalyseur consistant, par exemple, en un ou plusieurs composés tels que sels, oxydes ou sulfures de métaux de transition choisis parmi Fe, Cu, Cr, Mo, W, V, Co, Ni, Ag et Mn en association avec un support de type alumine activée, bauxite, silice/alumine ou zéolithe (FR-A-2277877).

La citation FR-A-1603452 concerne un procédé régénératif de purification de gaz résiduaires renfermant $H_2S$ et $SO_2$ mis en oeuvre en deux étapes. La première étape consiste à effectuer la réaction entre $H_2S$ et $SO_2$ à des températures allant de 120° C à 200 °C au contact d'un catalyseur consistant en charbon actif de manière à former du soufre, qui se dépose sur le catalyseur, et à produire un effluent gazeux renfermant $H_2S$ comme seul composé soufré. La deuxième étape consiste à oxyder l'$H_2S$ de l'effluent gazeux au moyen d'oxygène ou d'air, à des températures inférieures à 200° C au contact d'un catalyseur formé de charbon actif éventuellement imprégné d'iode ou d'un iodure. Le catalyseur de chaque étage est régénéré par balayage au moyen d'un gaz inerte à des températures de 350° C à 550° C.

La citation DE-A-2652 099 se rapporte à un procédé pour oxyder en soufre l'$H_2S$ contenu dans un gaz en opérant au contact d'un catalyseur consistant en charbon actif, éventuellement imprégné d'iodure de potassium, à des températures supérieures à 120° C et sous une pression de 1 à 50 bars en utilisant 0,55 à 0,65 mole d'oxygène par mole d'$H_2S$ à oxyder.

La citation US-A-3 790 659 concerne un procédé d'élimination de l'$H_2S$ contenu dans un gaz par oxydation en soufre au moyen d'oxygène ou/et de $SO_2$ à des températures de 120°C à 160°C au contact d'un catalyseur consistant en charbon actif renfermant 0,5% à 8% en poids de $SiO_2$,le soufre formé se déposant sur le catalyseur. On régénère le catalyseur chargé de soufre par balayage au moyen d'un gaz inerte à des températures de 380°C à 550°C, le balayage étant poursuivi jusqu'à ce que la teneur en soufre du catalyseur soit abaissée à une valeur comprise entre 10 et 12% en poids.

La citation DE-A-2 819 933 décrit l'utilisation d'un catalyseur à base de charbon actif pour la désodorisation de gaz renfermant, entre autres, de l'$H_2S$. Ce catalyseur consiste en un support en charbon actif auquel est incorporée une phase catalytique choisie parmi les composés oxydes ou sels d'un ou plusieurs métaux de transition pris parmi V, Mo et W, la quantité de phase catalytique, exprimée en poids de métal de transition, représentant 0,1% à 20% du poids du catalyseur calciné.

L'invention a pour objet un procédé pour oxyder directement en soufre, par voie catalytique, l'$H_2S$ contenu dans un gaz, en concentration allant de 0,01% à 5% en volume, ledit procédé assurant une conversion de l'$H_2S$ et une sélectivité en soufre, qui se maintiennent, d'une manière durable dans le temps, à des valeurs élevées. Ceci rend le procédé tout spécialement intéressant comme étape finale de traitement d'un gaz renfermant de l'$H_2S$ en concentration allant jusqu'à 1% en volume avant incinération dudit gaz aux fins de rejet à l'atmosphère.

Le procédé selon l'invention pour oxyder directement en soufre, par voie catalytique, l'$H_2S$ contenu dans un gaz, en concentration allant de 0,01% à 5% en volume, consiste à faire passer ledit gaz renfermant de

l'H$_2$S avec un gaz renfermant de l'oxygène libre, dans un rapport molaire O$_2$ :H$_2$S allant de 0,5 à 3 et de préférence de 0,5 à 1,5, au contact d'un catalyseur d'oxydation de l'H$_2$S en soufre, en réalisant ledit contact à des températures comprises entre 60°C et 180°C, le soufre formé par oxydation de l'H$_2$S se déposant sur le catalyseur, et il se caractérise en ce que le catalyseur d'oxydation de l'H$_2$S en soufre consiste en un support en charbon actif auquel est incorporée une phase catalytique choisie parmi les composés oxydes, sels ou sulfures d'un ou plusieurs métaux de transition pris dans le groupe formé de V, Mo, W, Ni et Co, la quantité de ladite phase catalytique, exprimée en poids de métal de transition, représentant 0,1% à 15%, de préférence 0,2% à 7% et plus spécialement 0,5% à 5%, du poids du catalyseur calciné.

Le catalyseur d'oxydation peut être préparé en faisant appel aux diverses méthodes connues pour incorporer un ou plusieurs composés métalliques à un solide divisé constituant un support de catalyseur. En particulier, on peut opérer par imprégnation du support choisi, se présentant sous la forme de poudre, de pastilles, de granulés, d'extrudés ou autres formes d'agglomérés, au moyen d'une solution ou d'un sol, dans un solvant tel que l'eau, du ou des composés métalliques désirés choisis parmi les sels d'un ou plusieurs des métaux de transition V, Mo, W, Ni et Co, puis séchage du support imprégné et calcination du produit séché à des températures pouvant aller de 250°C à 500°C, en opérant de préférence en atmosphère inerte.

La quantité globale du composé ou des composés des métaux de transition V, Mo, W, Ni et Co incorporée au support est choisie pour que le catalyseur d'oxydation, après calcination, ait une teneur pondérale globale en le ou les métaux de transition utilisés représentant 0,1% à 15%, de préférence 0,2% à 7% et tout particulièrement 0,5% à 5%.

Le gaz renfermant de l'oxygène libre utilisé pour l'oxydation, en soufre, de l'H$_2$S contenu dans le gaz à traiter est généralement de l'air, bien qu'il soit possible d'employer de l'oxygène pur, de l'air enrichi en oxygène, ou encore des mélanges, en proportions variées, d'oxygène et d'un gaz inerte autre que l'azote.

Le gaz renfermant de l'oxygène libre et le gaz à traiter renfermant l'H$_2$S peuvent être amenés séparément au contact du catalyseur d'oxydation. Toutefois, en vue d'obtenir un milieu réactionnel gazeux très homogène lors du contact avec le catalyseur, il est préférable de mélanger tout d'abord le gaz à traiter renfermant l'H$_2$S avec le gaz renfermant de l'oxygène libre et d'amener le mélange ainsi réalisé au contact du catalyseur d'oxydation.

Comme indiqué précédemment, le gaz renfermant de l'oxygène libre est utilisé en un rapport molaire O$_2$:H$_2$S allant de 0,5 à 3 et plus particulièrement de 0,5 à 1,5 dans le milieu réactionnel arrivant au contact du catalyseur d'oxydation de l'H$_2$S en soufre.

Les temps de contact du milieu réactionnel gazeux avec le catalyseur d'oxydation peuvent aller de 0,5 seconde à 20 secondes et de préférence de 1 seconde à 5 secondes, ces valeurs étant données dans les conditions normales de pression et de température.

Le passage du gaz à traiter renfermant l'H$_2$S et du gaz renfermant de l'oxygène libre au contact du catalyseur est réalisé à des températures comprises entre 60°C et 180°C, de manière à ce que le soufre formé par oxydation de l'H$_2$S se dépose sur le catalyseur. Lesdites températures prennent de préférence des valeurs allant de 90°C à 120°C.

Périodiquement on procède à la régénération du catalyseur d'oxydation chargé de soufre par balayage dudit catalyseur à l'aide d'un gaz non oxydant et de préférence substantiellement sec en opérant à des températures comprises entre 200°C et 500°C et de préférence entre 300°C et 450°C pour vaporiser le soufre retenu sur le catalyseur, puis on refroidit le catalyseur régénéré jusqu'à la température requise pour une nouvelle mise en oeuvre de la réaction d'oxydation, ce refroidissement étant réalisé au moyen d'un gaz inerte ayant une température inférieure à 160°C.

Le gaz issu de la mise en contact du gaz à traiter renfermant de l'H$_2$S et du gaz renfermant de l'oxygène libre avec le catalyseur d'oxydation est généralement soumis à une incinération thermique ou catalytique, pour transformer en SO$_2$ les traces d'H$_2$S qu'il peut encore contenir, avant d'être rejeté à l'atmosphère.

Le gaz de balayage utilisé pour la régénération du catalyseur d'oxydation chargé de soufre peut être tel que méthane, azote ou mélanges de tels gaz, ou encore consister en une fraction de l'effluent gazeux issu de l'étape d'oxydation et dirigé vers l'incinération ou en une fraction du gaz à traiter renfermant de l'H$_2$S.

Le gaz renfermant de l'H$_2$S en faible concentration que l'on traite par le procédé selon l'invention peut avoir des origines diverses. En particulier, un tel gaz peut être un gaz naturel à faible teneur en H$_2$S ou encore un gaz provenant de la gazéification du charbon ou des huilés lourdes, voire même un gaz résultant de l'hydrogénation d'un gaz résiduaire, par exemple un gaz résiduaire d'usine à soufre, renfermant des composés soufrés tels que SO$_2$, mercaptans, COS ou CS$_2$, convertibles en H$_2$S sous l'action de l'hydrogène ou de la vapeur d'eau ou bien un gaz résultant du traitement, au contact d'un catalyseur CLAUS susceptible de promouvoir la réaction de formation de soufre entre H$_2$S et SO$_2$, d'un effluent gazeux renfermant H$_2$S et SO$_2$ dans un rapport molaire H$_2$S:SO$_2$ supérieur à 2:1 et tel que ledit gaz résultant ne contienne plus que H$_2$S comme composé soufré. Le procédé selon l'invention s'applique au traitement de gaz renfermant H$_2$S en concentration allant de 0,01% à 5% en volume et il convient tout spécialement pour le traitement d'un courant gazeux renfermant 0,01% à 1% d'H$_2$S en volume. Un tel courant gazeux peut être produit, notamment, dans les unités de désulfuration de gaz renfermant H$_2$S et SO$_2$, qui mettent en oeuvre la réaction de formation de soufre entre H$_2$S et

SO$_2$ au contact d'un catalyseur CLAUS opérant à des températures inférieures à 180°C auxquelles le soufre formé lors de ladite réaction se dépose sur le catalyseur, en traitant dans lesdites unités des gaz renfermant H$_2$S et SO$_2$ dans un rapport molaire supérieur à 2:1 de telle sorte que le courant gazeux issu de ces unités ne renferme plus que H$_2$S comme composé soufré.

La mise en oeuvre de la réaction d'oxydation catalytique selon l'invention peut être réalisée dans une zone unique d'oxydation catalytique, qui opère alternativement en phase d'oxydation et en phase de régénération/refroidissement. Une telle mise en oeuvre est retenue lorsque le gaz à traiter renferme peu d'H$_2$S et que de ce fait la régénération du catalyseur est peu fréquente. Avantageusement la mise en oeuvre de la réaction catalytique selon l'invention est réalisée dans une pluralité de zones d'oxydation catalytique, qui opèrent de telle sorte que l'une au moins desdites zones opère en phase de régénération/refroidissement, tandis que les autres zones sont en phase d'oxydation catalytique. On peut encore opérer en ayant une ou plusieurs zones en phase de réaction d'oxydation catalytique, au moins une zone en phase de régénération et au moins une zone en phase de refroidissement.

Le gaz utilisé pour la régénération du catalyseur d'oxydation circule de préférence en circuit fermé à partir d'une zone de chauffage, en passant successivement par la zone catalytique en cours de régénération et une zone de refroidissement, dans laquelle la majeure partie du soufre qu'il contient est séparée par condensation, pour revenir à la zone de chauffage. Bien entendu, le gaz de régénération peut également circuler en circuit ouvert.

Le gaz utilisé pour le refroidissement du catalyseur d'oxydation régénéré est du même type que celui employé pour la régénération du catalyseur chargé de soufre. Les circuits de gaz de régénération et de gaz de refroidissement peuvent être indépendants l'un de l'autre. Toutefois, selon un mode de réalisation, le circuit de gaz de régénération défini plus haut peut également comporter une dérivation reliant la sortie de sa zone de refroidissement à l'entrée de la zone en cours de régénération en bipassant sa zone de chauffage, ce qui permet de court-circuiter ladite zone de chauffage et ainsi d'utiliser le gaz de régénération comme gaz de refroidissement.

Lorsque l'on traite selon l'invention un courant gazeux renfermant de l'H$_2$S produit dans un processus de désulfuration de gaz renfermant H$_2$S et SO$_2$, qui met en oeuvre la réaction de formation de soufre entre H$_2$S et SO$_2$ au contact d'un catalyseur CLAUS opérant à des températures inférieure à 180°C et qui traite un gaz renfermant H$_2$S et SO$_2$ dans un rapport molaire supérieur à 2:1 comme indiqué précédemment, on peut mettre en oeuvre la réaction catalytique CLAUS de formation de soufre entre H$_2$S et SO$_2$ et la réaction d'oxydation catalytique de l'H$_2$S en soufre dans un même réacteur, dit réacteur mixte, qui comporte deux zones catalytiques disposées en série, à savoir une zone de réaction catalytique CLAUS, qui renferme un catalyseur CLAUS apte à promouvoir la réaction entre H$_2$S et SO$_2$ et qui est alimentée par le gaz renfermant H$_2$S et SO$_2$ dans un rapport molaire supérieur à 2:1 et fournit un courant gazeux renfermant H$_2$S comme seul composé soufré en concentration notamment comprise entre 0,01% et 1% en volume, et une zone d'oxydation catalytique de l'H$_2$S en soufre, qui renferme un catalyseur d'oxydation selon l'invention et qui est alimentée simultanément par le courant gazeux renfermant de l'H$_2$S issu de la zone de réaction catalytique CLAUS et par une quantité d'un gaz renfermant de l'oxygène libre telle que définie précédemment. On peut utiliser un réacteur mixte unique, qui opère alternativement en phase de réaction (réaction de CLAUS et réaction d'oxydation de l'H$_2$S) et en phase de régénération/refroidissement. Avantageusement, on fait appel à une pluralité de réacteurs mixtes qui opèrent de telle sorte que l'un au moins desdits réacteurs est en phase de régénération/refroidissement alors que les autres réacteurs sont en phase de réaction, ou bien qu'un ou plusieurs réacteurs sont en phase de réaction alors qu'au moins un réacteur est en phase de régénération et qu'au moins un réacteur est en phase de refroidissement. Des informations complémentaires sur la mise en oeuvre particulière précitée en réacteurs mixtes peuvent être trouvées dans la citation FR-A-2277877.

L'invention est illustrée par les exemples suivants donnés à titre non limitatif.

EXEMPLE 1 :

On opérait dans un réacteur d'oxydation catalytique présentant une entrée et une sortie séparées par un lit fixe d'un catalyseur selon l'invention promoteur de l'oxydation directe de l'H$_2$S en soufre. Ledit réacteur fonctionnait de manière isotherme et était agence en outre de telle sorte qu'alternativement, par l'intermédiaire de vannes commutables par une horloge, il opérait en phase de réaction, c'est-à-dire avait son entrée reliée à un conduit d'amenée des gaz, sur lequel était monté un échangeur indirect de chaleur fonctionnant en réchauffeur, et sa sortie connectée à un conduit d'évacuation des gaz, ou bien il opérait en phase de régénération/refroidissement, c'est-à-dire était disposé dans un circuit de régénération/refroidissement équipé de moyens pour assurer la circulation d'un gaz de balayage non oxydant consistant en azote sec à travers le réacteur d'oxydation depuis un réchauffeur jusqu'à un condenseur à soufre et retour audit réchauffeur et pour faire ensuite circuler un gaz froid, de même composition que le gaz de régénération, à travers le réacteur ayant subi la régénération.

Le catalyseur promoteur de la réaction d'oxydation de l'H$_2$S en soufre contenu dans le réacteur d'oxydation catalytique consistait en un charbon actif au vanadium renfermant 2,9% de vanadium en poids. Ce catalyseur était obtenu en imprégnant 50 parties en poids d'un charbon actif, se présentant sous la forme d'extrudés d'environ 1,6mm de diamètre et possédant une aire spécifique BET égale à 1000m$^2$/g, au moyen d'une solution aqueuse formée à partir de 215 parties en poids d'eau, 5 parties en poids de sulfate de vanadyle et 8 parties en poids de NaOH, puis en évaporant l'eau du mélange résultant en opérant dans un évaporateur rotatif travaillant sous vide, et en séchant le produit obtenu à l'étuve à 100°C pendant 12 heures, puis en soumettant le produit étuvé à une calcination sous azote à 300°C pendant 3 heures.

A titre de gaz renfermant de l'H$_2$S, on traitait un mélange gazeux formé d'azote, de vapeur d'eau et d'H$_2$S et renfermant, en volume, 30% de vapeur d'eau et 2500vpm d'H$_2$S, ledit mélange gazeux ayant une température de 100°C.

Au gaz à traiter renfermant de l'H$_2$S, on ajoutait une quantité contrôlée d'air, à température ambiante, pour produire un mélange gazeux réactif présentant un rapport molaire O$_2$:H$_2$S de valeur appropriée et l'on préchauffait ledit mélange à la température θ choisie pour l'oxydation, par passage dans l'échangeur indirect de chaleur fonctionnant en réchauffeur.

Le réacteur d'oxydation étant connecté pour opérer en phase de réaction, on injectait le mélange gazeux réactif, préchauffé à la température θ, dans ledit réacteur en réalisant cette injection avec un débit approprié pour obtenir la valeur désirée du temps de contact entre le mélange gazeux réactif et le catalyseur d'oxydation et en maintenant à la valeur θ la température à l'intérieur du réacteur pendant toute la durée de l'opération de ce dernier en phase de réaction. A la sortie dudit réacteur d'oxydation, on recueillait, par le conduit d'évacuation des gaz, un effluent gazeux désulfuré, dont on déterminait les teneurs respectives en H$_2$S et SO$_2$ aux fins de calcul du taux de conversion de l'H$_2$S et de la sélectivité en soufre de l'oxydation.

Après 6 heures de fonctionnement en phase de réaction, le réacteur d'oxydation passait en phase de régénération/refroidissement. Pour mettre en oeuvre ladite phase, on injectait tout d'abord dans le réacteur d'oxydation à régénérer, avec un débit de 50 l/heure, un courant de gaz de régénération (gaz de balayage) consistant en azote sec, ledit courant ayant été amené préalablement à une température de 420°C dans le réchauffeur du circuit de régénération. Le gaz de régénération chargé de soufre issu du réacteur d'oxydation soumis à la régénération passait ensuite dans le condenseur à soufre du circuit de régénération, pour y être refroidi à environ 130°C de manière à séparer par condensation la plus grande partie du soufre qu'il contenait, puis retournait au réchauffeur pour être réchauffé à environ 420°C en vue de sa réutilisation pour la régénération. La circulation du gaz de régénération à travers le réacteur d'oxydation soumis à la régénération se poursuivait pendant 3 heures. A l'issue de cette période, le réacteur d'oxydation régénéré était refroidi à la température θ, en faisant passer dans ledit réacteur un courant de gaz de refroidissement, ayant mêmes composition et débit que le gaz de régénération et une température égale à θ, pendant une durée égale à 3 heures.

A l'issue de ce refroidissement, le réacteur d'oxydation était à nouveau placé en phase de réaction pour un nouveau cycle d'opérations, chaque cycle comportant une phase de réaction et une phase de régénération/refroidissement.

Dans une première série d'essais, le mélange gazeux réactif, présentant un rapport molaire O$_2$:H$_2$S égal à 0,76 et préchauffé à 105°C, était amené au réacteur d'oxydation avec un débit de 75 litres normaux par heure, ce qui correspondait à un temps de contact TPN (température et pression normale) avec le catalyseur égal à 4 secondes, la température à l'intérieur du réacteur étant maintenue à 105°C pendant toute la durée de l'oxydation (phase de réaction).

La conversion de l'H$_2$S, égale à 100% après le premier cycle d'opérations, se maintenait encore à cette valeur après le treizième cycle d'opérations. La sélectivité en soufre, égale à 100% après le premier cycle d'opérations, était encore de 94,2% après le neuvième cycle et de 93% après le treizième cycle.

Dans une deuxième série d'essais, le mélange gazeux réactif, présentant un rapport molaire O$_2$:H$_2$S égal à 0,5 et préchauffé à 150°C, était amené au réacteur d'oxydation avec un débit de 100 litres normaux par heure, ce qui correspondait à un temps de contact TPN avec le catalyseur égal à 3 secondes, la température à l'intérieur du réacteur étant maintenue à 150°C pendant toute la durée de la phase de réaction.

Après deux cycles d'opérations, la conversion de l'H$_2$S et la sélectivité en soufre étaient chacune égales à 100%.

Dans une troisième série d'essais, le mélange gazeux réactif, présentant un rapport molaire O$_2$:H$_2$S égal à 0,5 et préchauffé à 150°C, était amené au réacteur d'oxydation avec un débit de 300 litres normaux par heure, ce qui correspondait à un temps de contact TPN avec le catalyseur égal à 1 seconde, la température à l'intérieur du réacteur étant maintenue à 150°C pendant toute la durée de la phase de réaction.

Après trois cycles d'opérations, la conversion de l'H$_2$S restait égale à 100% et la sélectivité en soufre, égale à 100% après le premier cycle, avait une valeur de 95%.

La conversion de l'H$_2$S est définie par le rapport

$$\frac{(H_2S)_e - (H_2S)_s}{(H_2S)_e}$$

et la sélectivité en soufre est donnée par le rapport

$$1 - \frac{(SO_2)_s}{(H_2S)_e - (H_2S)_s} ,$$

avec dans ces rapports, que l'on exprime en %, $(H_2S)_e$ désignant la quantité molaire d'$H_2S$ dans le gaz à traiter, $(H_2S)_s$ représentant la somme des quantités molaires d'$H_2S$ dans le gaz traité et dans le gaz issu de la régénération et $(SO_2)_s$ désignant la somme des quantités molaires de $SO_2$ dans le gaz traité et dans le gaz issu de la régénération.

EXEMPLE 2 :

En opérant dans des conditions analogues a celles définies dans l'exemple 1, on traitait le même gaz renfermant de l'$H_2S$ en utilisant, à titre de catalyseur promoteur de la réaction d'oxydation de l'$H_2S$ en soufre, un charbon actif au tungstène renfermant 3,7% de tungstène en poids. Ce catalyseur était obtenu en imprégnant 50 parties en poids d'un charbon actif, se présentant sous la forme d'extrudés d'environ 1,6 mm de diamètre et possédant une aire spécifique BET égale à 1000 $m^2$/g, au moyen d'une phase aqueuse formée à partir de 100 parties en poids d'eau, 0,42 partie en poids de NaOH et 2,27 parties en poids de $H_2WO_4$, puis en évaporant l'eau du mélange résultant, séchant le produit obtenu à l'étuve et calcinant le produit étuvé comme indiqué dans l'exemple 1.

Dans la série d'essais réalisée, le mélange gazeux réactif, présentant un rapport molaire $O_2$:$H_2S$ égal à 0,5 et préchauffé à 150°C, était amené au réacteur d'oxydation avec un débit de 100 litres normaux par heure, ce qui correspondait à un temps de contact TPN avec le catalyseur égal à 3 secondes, la température à l'intérieur du réacteur étant maintenue à 150°C pendant toute la durée de la phase de réaction de chaque cycle d'opérations.

Après quatre cycles d'opérations, la conversion de l'$H_2S$ était encore égale à 100% et la sélectivité en soufre, égale à 100% après le premier cycle, avait une valeur de 84%.

EXEMPLE 3 :

En opérant dans des conditions analogues à celles définies dans l'exemple 1, on traitait le gaz renfermant de l'$H_2S$ défini dans cet exemple 1 en utilisant, à titre de catalyseur promoteur de la réaction d'oxydation de l'$H_2S$ en soufre, un charbon actif au nickel renfermant 2,4% de nickel en poids.

Ce catalyseur était obtenu en imprégnant 50 parties en poids du charbon actif utilisé dans l'exemple 1 au moyen d'une solution aqueuse formée à partir de 70,7 parties en poids d'eau et de 2,5 parties en poids de $NiCl_2$, puis en achevant la préparation du catalyseur comme indiqué dans l'exemple 1.

Dans la série d'essais réalisée, le mélange gazeux réactif, présentant un rapport molaire $O_2$:$H_2S$ égal à 1, était amené au réacteur d'oxydation avec une température de 100°C et un débit de 100 litres normaux par heure, ledit débit assurant un temps de contact TPN entre le mélange gazeux réactif et le catalyseur égal à 3 secondes, la température à l'intérieur du réacteur étant maintenue à 100°C pendant toute la durée de la phase de réaction de chaque cycle d'opérations.

Après six cycles d'opérations, la conversion de l'$H_2S$ était encore égale à 100% et la sélectivité en soufre, égale à 100% après le premier cycle, avait une valeur de 90%.

EXEMPLE 4 :

En opérant dans des conditions analogues à celles définies dans l'exemple 1, on traitait le gaz renfermant de l'$H_2S$ défini dans cet exemple 1 en utilisant, à titre de catalyseur promoteur de la réaction d'oxydation de l'$H_2S$ en soufre, un charbon actif au molybdène renfermant 2,9% de molybdène en poids. Ce catalyseur était obtenu en imprégnant 50 parties en poids du charbon actif utilisé dans l'exemple 1 au moyen d'une solution aqueuse formée à partir de 90 parties en poids d'eau, de 2,41 parties en poids d'acide phosphomolybdique $H_3PO_4(MoO_3)_4$ et de 0,16 partie en poids de NaOH, puis en achevant la préparation du catalyseur comme indiqué dans l'exemple 1.

Dans la série d'essais réalisée, le mélange gazeux réactif, présentant un rapport molaire $O_2$:$H_2S$ égal à 0,5, était amené au réacteur d'oxydation avec une température de 100°C et un débit de 100 litres normaux par heure, ledit débit assurant un temps de contact TPN entre le mélange gazeux réactif et le catalyseur égal à 3 secondes, la température à l'intérieur du réacteur étant maintenue à 100°C pendant toute la durée de la phase de réaction de chaque cycle d'opérations.

Après quatre cycles d'opérations, la conversion de l'$H_2S$ était encore égale à 100% et la sélectivité en soufre avait une valeur de 87%.

**Revendications**

1. Procédé pour oxyder directement en soufre, par voie catalytique, l'$H_2S$ contenu dans un gaz, en concentration allant de 0,01 % à 5 % en volume, dans lequel on fait passer le gaz renfermant $H_2S$ avec un gaz renfermant de l'oxygène libre, dans un rapport molaire $O_2$:$H_2S$ allant de 0,5 à 3, au contact d'un catalyseur d'oxydation de l'$H_2S$ en soufre, en réalisant ledit contact à des températures comprises entre 60° C et 180 °C, le soufre formé par oxydation de l'H2S se déposant sur le catalyseur, ledit procédé se caractérisant en ce que le catalyseur d'oxydation de l'$H_2S$ en soufre consiste en un support en charbon actif auquel est incorporée une phase catalytique choisie parmi les composés oxydes, sels ou sulfures d'un ou plusieurs métaux de transition pris dans le groupe formé de V, Mo, W, Ni et Co, la quantité de ladite phase catalytique, exprimée en poids de métal de transition, représentant 0,1% à 15% du poids du catalyseur calciné.

2. Procédé selon la revendication 1, caractérisé en ce que la quantité de phase catalytique présente dans le catalyseur d'oxydation de l'$H_2S$ en soufre représente 0,2% à 7% du poids du catalyseur calciné.

3. Procédé selon la revendication 2, caractérisé en ce que ladite quantité de phase catalytique représente 0,5 % à 5 % du poids du catalyseur calciné.

4. Procédé selon l'une des revendications 1 à 3, caractérisé en ce que le temps de contact du milieu réactionnel gazeux, formé du gaz à traiter renfermant de l'$H_2S$ et du gaz renfermant de l'oxygène libre, avec le catalyseur d'oxydation, exprimé dans les conditions normales de pression et de température, va de 0,5 seconde à 20 secondes.

5. Procédé selon la revendication 4, caractérisé en ce que ledit temps de contact va de 1 seconde à 5 secondes.

6. Procédé selon l'une des revendications 1 à 5, caractérisé en ce que le passage du gaz à traiter renfermant l'$H_2S$ et du gaz renfermant de l'oxygène libre au contact du catalyseur d'oxydation de l'$H_2S$ en soufre est réalisé à des températures allant de 90°C à 120°C.

7. Procédé selon l'une des revendications 1 à 6, caractérisé en ce que le catalyseur d'oxydation chargé de soufre est régénéré périodiquement par balayage dudit catalyseur à l'aide d'un gaz non oxydant en opérant à des températures comprises entre 200°C et 500°C pour vaporiser le soufre retenu sur le catalyseur, après quoi on refroidit le catalyseur régénéré jusqu'à la température requise pour une nouvelle mise en oeuvre de la réaction d'oxydation, ce refroidissement étant réalisé au moyen d'un gaz inerte ayant une température inférieure à 160°C.

8. Procédé selon la revendication 7, caractérisé en ce que le gaz de régénération est un gaz substantiellement sec.

9. Procédé selon la revendication 7 ou 8, caractérisé en ce que les températures de régénération sont comprises entre 300° C et 450° C.

10. Procédé selon l'une des revendications 1 à 9, caractérisé en ce que le gaz à traiter renfermant H2S et le gaz renfermant de l'oxygène libre sont amenés au contact du catalyseur avec un rapport molaire O2:H2S allant de 0,5 à 1,5.

11. Procédé selon l'une des revendications 1 à 10, caractérisé en ce que le gaz à traiter est un courant gazeux renfermant $H_2S$ en concentration allant de 0,01% à 1% en volume.

12. Procédé selon la revendication 11, caractérisé en ce que ledit courant gazeux renfermant $H_2S$ est produit dans une unité de désulfuration de gaz renfermant $H_2S$ et $SO_2$, qui met en oeuvre la réaction de formation de soufre entre $H_2S$ et $SO_2$ au contact d'un catalyseur CLAUS opérant à des températures inférieures à 180°C auxquelles le soufre formé lors de ladite réaction se dépose sur le catalyseur, en traitant dans ladite unité un gaz renfermant $H_2S$ et $SO_2$ dans un rapport molaire supérieur à 2:1 de telle sorte que le courant gazeux issu de cette unité ne renferme plus que $H_2S$ comme composé soufré.

**Claims**

1. Process for the direct oxidation into sulphur, by a catalytic method, of $H_2S$ contained in a gas, in a concentration of from 0.01% to 5% by volume, in which the gas containing $H_2S$, together with a gas containing free oxygen in a molar ratio $O_2$:$H_2S$ from 0.5 to 3, is brought into contact with a catalyst oxidising the $H_2S$ into sulphur by producing said contact at temperatures of between 60°C and 180°C, the sulphur formed by oxidation of $H_2S$ being deposited on the catalyst, said process being characterised in that the catalyst oxidising $H_2S$ into sulphur comprises a support of active carbon in which there is incorporated a catalytic phase selected from among the oxide, salt or sulphide compounds of one or several transition metals taken from among the group formed of V, Mo, W, Ni and Co, the quantity of said catalytic phase, expressed by weight of transition metal, representing 0.1% to 15% of the weight of the calcined catalyst.

2. Process according to Claim 1, characterised in that the quantity of the catalytic phase present in the catalyst oxidising $H_2S$ into sulphur represents 0.2% to 7% by weight of the calcined catalyst.

3. Process according to Claim 2, characterised in that said quantity of the catalytic phase represents 0.5 to 5% by weight of the calcinated catalyst.

4. Process according to any one of Claims 1 to 3, characterised in that the time for which the reactive gaseous mixture, formed of the gas to be treated containing $H_2S$ and of the gas containing free oxygen, is in contact with the oxidation catalyst, expressed in normal conditions of pressure and temperature, is from 0.5 seconds to 20 seconds.

5. Process according to Claim 4, characterised in that said contact time is from 1 to 5 seconds.

6. Process according to any one of Claims 1 to 5, characterised in that the passage of the gas to be treated containing $H_2S$ and the gas containing free oxygen in contact with the catalyst oxidising $H_2S$ into sulphur is produced at temperatures of from 90°C to 120°C.

7. Process according to any one of Claims 1 to 6, characterised in that the oxidation catalyst charged with sulphur is regenerated periodically by purging said catalyst with the aid of a non-oxidising gas whilst operating at temperatures of between 200°C and 500°C to evaporate the sulphur retained on the catalyst, after which the regenerated catalyst is cooled to the temperature required for restarting the oxidation reaction, this cooling being performed by means of an inert gas having a temperature of less than 160°C.

8. Process according to Claim 7, characterised in that the regeneration gas is a substantially dry gas.

9. Process according to Claim 7 or 8, characterised in that the regeneration temperatures are between 300°C and 450°C.

10. Process according to any one of Claims 1 to 9, characterised in that the gas containing $H_2S$ to be treated and the gas containing free oxygen are brought into contact with the catalyst with a molar ratio $O_2:H_2S$ of from 0.5 to 1.5.

11. Process according to any one of Claims 1 to 10, characterised in that the gas to be treated is a gaseous stream containing $H_2S$ in a concentration of from 0.01% to 1% by volume.

12. Process according to Claim 11, characterised in that said gaseous stream containing $H_2S$ is produced in a desulphurisation unit treating a gas containing $H_2S$ and $SO_2$, which performs the reaction of the formation of sulphur between $H_2S$ and $SO_2$ in contact with a CLAUS catalyst operating at temperatures of less than 180°C at which the sulphur formed during said reaction is deposited on the catalyst, by processing, in said unit, a gas containing $H_2S$ and $SO_2$ in a molar ratio of greater than 2:1 in such a manner that the gaseous stream given off by this unit now only contains $H_2S$ as sulphur compound.

**Patentansprüche**

1. Verfahren zur Direktoxidation von in einem Gas in einer Konzentration von 0,01 bis 5 Vol.-% enthaltenem $H_2S$ auf katalytischem Wege zu Schwefel, bei dem man das $H_2S$ enthaltende Gas zusammen mit einem freien Sauerstoff enthaltenden Gas bei einem Molverhältnis $O_2:H_2S$ von 0,5 bis 3 mit einem Katalysator für die Oxidation von $H_2S$ zu Schwefel kontaktiert, wobei man die Kontaktierung bei Temperaturen zwischen 60 und 180°C durchführt, und der sich durch die Oxidation von $H_2S$ bildende Schwefel auf dem Katalysator abscheidet, dadurch **gekennzeichnet,** daß der Katalysator für die Oxidation von $H_2S$ zu Schwefel aus einem Träger aus Aktivkohle besteht, dem eine katalytische Phase zugesetzt ist, ausgewählt unter Oxiden, Salzen oder Sulfiden eines oder mehrerer Übergangsmetalle der Gruppe V, Mo, W, Ni und Co, wobei die Menge der katalytischen Phase, bezogen auf das Gewicht des Übergangsmetalls, 0,1 bis 15% des Gewichts des geglühten Katalysators beträgt.

2. Verfahren nach Anspruch 1, dadurch **gekennzeichnet,** daß die Menge der katalytischen Phase im Katalysator für die Oxidation des $H_2S$ zu Schwefel 0,2 bis 7% des Gewichts des geglühten Katalysators beträgt.

3. Verfahren nach Anspruch 2, dadurch **gekennzeichnet,** daß die Menge der katalytischen Phase 0,5 bis 5% des Gewichts des geglühten Katalysators beträgt.

4. Verfahren nach einem der Ansprüche 1 bis 3, dadurch **gekennzeichnet,** daß die Dauer der Kontaktierung des aus dem $H_2S$ enthaltenden zu behandelnden Gas und dem freien Sauerstoff enthaltenden Gas gebildeten gasförmigen Reaktionsgemisches mit dem Oxidationskatalysator unter normalen Druck- und Temperaturbedingungen 0,5 bis 20 Sekunden beträgt.

5. Verfahren nach Anspruch 4, dadurch **gekennzeichnet,** daß die Kontaktierungsdauer 1 bis 5 Sekunden beträgt.

6. Verfahren nach einem der Ansprüche 1 bis 5, dadurch **gekennzeichnet,** daß die Kontaktierung des $H_2S$ enthaltenden zu behandelnden Gases sowie des freien Sauerstoff enthaltenden Gases mit dem Katalysator für die Oxidation des $H_2S$ zu Schwefel bei Temperaturen zwischen 90 und 120°C erfolgt.

7. Verfahren nach einem der Ansprüche 1 bis 6, dadurch **gekennzeichnet,** daß der mit Schwefel beladene Oxidationskatalysator von Zeit zu Zeit durch Spülen des Katalysators mit einem nichtoxidierenden Gas bei Temperaturen zwischen 200 und 500°C zur Verdampfung des auf dem Katalysator festgehaltenen Schwefels regeneriert wird, wonach der regenerierte Katalysator bis auf die für die erneute Durchführung der Oxidationsreaktion erforderliche Temperatur abgekühlt wird, wobei diese Abkühlung mit Hilfe eines Inertgases mit einer Temperatur von unter 160°C durchgeführt wird.

8. Verfahren nach Anspruch 7, dadurch **gekennzeichnet,** daß das Regenerationsgas ein praktisch trockenes Gas ist.

9. Verfahren nach Anspruch 7 oder 8, dadurch **gekennzeichnet,** daß die Regenerationstemperaturen zwischen 300 und 450°C liegen.

10. Verfahren nach einem der Ansprüche 1 bis 9, dadurch **gekennzeichnet,** daß das $H_2S$ enthaltende zu behandelnde Gas und das freien Sauerstoff enthaltende Gas mit dem Katalysator bei einem Molarverhältnis $O_2:H_2S$ von 0,5 bis 1,5 kontaktiert werden.

11. Verfahren nach einem der Ansprüche 1 bis 10, dadurch **gekennzeichnet,** daß das zu behandelnde Gas ein $H_2S$ in einer Konzentration von 0,01 bis 1 Vol.-% enthaltender Gasstrom ist.

12. Verfahren nach Anspruch 11, dadurch **gekennzeichnet,** daß der $H_2S$ enthaltende Gasstrom in einer Anlage zur Entschwefelung von $H_2S$ und $SO_2$ enthaltendem Gas, in der die Umsetzung zur Bildung von Schwefel zwischen $H_2S$ und $SO_2$ am Kontakt eines CLAUS-Katalysators bei Temperaturen unter 180°C stattfindet, bei denen der während der Umsetzung gebildete Schwefel sich auf dem Katalysator absetzt, erzeugt wird, indem man in der Anlage ein $H_2S$ und $SO_2$ in einem Molverhältnis von über 2:1 enthaltendes Gas so behandelt, daß der diese Anlage verlassende Gasstrom keine andere Verbindung mehr als $H_2S$ als Schwefelverbindung enthält.